# EUROPÄISCHE PATENTSCHRIFT

(11) **EP 3 337 924 B1**
(45) Veröffentlichungstag und Bekanntmachung des Hinweises auf die Patenterteilung: **19.06.2019**
(21) Anmeldenummer: 16750434.9
(22) Anmeldetag: 08.08.2016
(51) Int. Cl.: C09J 7/21, D06N 7/00, D06N 3/00, D21H 27/20, D21H 17/63, D21H 25/00, D04H 1/64, D04H 1/68, D04H 1/4218

(54) **MALERVLIES UND VERFAHREN ZU DESSEN HERSTELLUNG**
BASE NON-WOVEN FABRIC AND METHOD FOR THE PRODUCTION THEREOF
TOILE INTISSÉE DE RÉNOVATION ET PROCÉDÉ DE FABRICATION

(30) Priorität: 18.08.2015 DE 102015113674
(43) Veröffentlichungstag der Anmeldung: 27.06.2018
(73) Patentinhaber: Surtech GmbH Wigbert H. Sauer, 71732 Tamm (DE)
(72) Erfinder: SAUER, Wigbert, 71229 Leonberg (DE)
(74) Vertreter: Prinz & Partner mbB
(86) Internationale Anmeldenummer: PCT/EP2016/068866
(87) Internationale Veröffentlichungsnummer: WO 2017/029146

(56) Entgegenhaltungen:
- EP-A1- 1 707 667
- EP-A1- 2 602 385
- WO-A1-2013/182783
- WO-A2-2005/010294

## Beschreibung

Die Erfindung betrifft ein überstreichbares Malervlies und ein Verfahren zu dessen Herstellung.

Malervliese dienen als Untergrundvorbereitung für Maler- und Armierungsarbeiten zum Ausgleich von Unebenheiten und Fehlstellen im Wandaufbau sowie zur Rissüberbrückung und Flächenarmierung. Bislang wurden hierzu Glasfaservliese verwendet, die in Dispersions- oder mineralischen Spachtelmassen eingebettet oder in ein auf den Wanduntergrund angelegtes Dispersionskleberbett eingelegt werden. Üblicherweise erfolgen anschließend Dispersionsanstriche mit dekorativem Charakter oder speziellen technischen Eigenschaften bezüglich der Oberfläche.

Die DE-U-81 24 330 beschreibt selbsthaftende Gewebebahnen, die aus natürlichen oder synthetischen anorganischen Fasern bestehen und bei denen die Kett- und Schussfäden mit einer dünnen Schicht aus Kunststoffappretur allseitig umhüllt sind. Die Kunststoffappretur soll die Schiebefestigkeit des Glasfasergewebes verbessern.

Aus der EP-A-909 850 sind ferner Textilglasgewebebahnen bekannt, deren Faseranteil zu 100 % aus Textilglasfasern besteht und deren Rückseite eine selbsthaftende Klebeschicht aufweist, bei denen mindestens diejenigen Abschnitte der Kett- und Schußfäden, welche die Vorderseite der Gewebebahn bilden, mit einer Dünnschicht aus einem polymeren Haftvermittler beschichtet sind, wobei die Dünnschicht einen ein- oder mehrfarbigen dekorativen Aufdruck trägt.

Die europäische Patentschrift EP 0 562 066 offenbart selbstklebende Wandbeläge auf Basis eines hydrophilen Fasermaterials, vorzugsweise auf Zellulosebasis, wobei den hydrophilen Fasern zusätzlich mindestens 3 und höchstens 60 Gew.-% hydrophobe Fasern wie mineralische Fasern, Polyesterfasern oder Polyolefinfasern beigemischt sein können. Das Substrat dieser bekannten Wandbeläge kann zusätzlich ein polymeres Bindemittel wie z.B. Polyvinylacetat oder einen Styrol-Butadien-Kautschuk-Latex neben weiteren üblichen Füll- und Zusatzstoffen enthalten. Damit soll eine Verbesserung der Dimensionsstabilität selbstklebender Tapeten erreicht werden, insbesondere in Räumen mit hoher Luftfeuchtigkeit, in denen herkömmliche Tapeten häufig Ablösungserscheinungen zeigen und zur Blasenbildung neigen.

Die DE 20 2005 005 208 U1 beschreibt ein textiles Flächengebilde zur Verwendung als Wandbekleidung, insbesondere als Malervlies oder Tapete, das aus einem mineralfaserfreien Faservlies gebildet und mit einer selbsthaftenden Beschichtung versehen ist. Die selbsthaftende Beschichtung ist rückseitig in Form von Klebepunkten aufgebracht. Das Faservlies ist aus Naturfasern oder einer Mischung aus Naturfasern und verrottbaren synthetischen Fasern hergestellt. Diese Vliese sind jedoch nicht für Anwendungen in Feuchträumen oder anderen Räumen geeignet, in denen höhere Anforderungen an Brandschutz und Hygiene bestehen. Außerdem hat sich gezeigt, dass die Klebepunkte nach einiger Zeit durch das Faservlies durchschlagen und auf der Anstrichseite sichtbar werden.

Gewebebahnen aus Textilglasfasern, die sowohl als fertige Wandtapete als auch zur Untergrundvorbereitung für Malerarbeiten eingesetzt werden können, zeigen herstellungsbedingt eine Oberflächenstruktur, auf der das Bindungsmuster der Kett- und Schussfäden auch nach einem Farbanstrich noch sichtbar ist. Dies ist für viele Anwendungen unerwünscht. Die bisher gebräuchlichen verrottungsfesten Malervliese aus 100 % künstlichen Mineralfasern (KMF-Fasern), insbesondere Glasfasern, lassen sich dagegen nur auf ebenen Flächen verarbeiten. Die Glasfaservliese können wegen ihrer natürlichen Brüchigkeit nicht um Ecken herum tapeziert werden und brechen an den Raumkanten auf.

Es besteht daher weiter bedarf an widerstandsfähigen, überstreichbaren Malervliesen, die einfach und sicher zu verarbeiten sind und mit denen sich in allen Anwendungsbereichen feine, tuchartige oder textilähnliche Oberflächenstrukturen verwirklichen lassen.

Erfindungsgemäß wird diese Aufgabe durch ein überstreichbares Malervlies gelöst, das ein Grundvlies aus Mineralfasern in einem Anteil von 60 bis 90 Gewichtsprozent und organischen Fasern in einem Anteil von 10 bis 40 Gewichtsprozent, jeweils bezogen auf das Fasergewicht, sowie einen Bindemittelanteil von 0 bis 30 Gewichtsprozent umfasst, bezogen auf das Gesamtgewicht des Grundvlieses, und eine mit einer Haftkleberzusammensetzung beschichtete Rückseite zur Befestigung an einem Untergrund aufweist. Die Haftkleberzusammensetzung bildet eine rasterförmige oder durchgehende unterbrochene Schicht, wobei das Grundvlies offene Poren aufweist, die nicht von der Haftkleberzusammensetzung bedeckt sind.

Das erfindungsgemäße Malervlies kann durch ein Verfahren hergestellt werden, bei dem ein Grundvlies aus 60 bis 90 Gewichtsprozent Mineralfasern und 10 bis 40 Gewichtsprozent organischen Fasern, bezogen auf das Fasergewicht, sowie 0 bis 30 Gewichtsprozent Bindemittel, bezogen auf das Gesamtgewicht des Grundvlieses, auf einer zur Befestigung an einem Untergrund vorgesehenen Rückseite des Grundvlieses mit einer Haftkleberzusammensetzung beschichtet wird. Vor dem Auftragen auf das Grundvlies wird die Haftkleberzusammensetzung aufgeschäumt, und die aufgeschäumte Haftkleberzusammensetzung wird auf die Rückseite des Grundvlieses aufgebracht. Dadurch wird auf der Rückseite des Grundvlieses eine durchgehende unterbrochene Haftkleberschicht gebildet, wobei offene Poren des Grundvlieses nicht von der Haftkleberschicht bedeckt werden. Die durchgehende unterbrochene Haftkleberschicht kann daher auch als "netzförmige Schicht" beschrieben werden.

Gemäß einem weiteren Aspekt betrifft die Erfindung ein Verfahren zur Herstellung des erfindungsgemäßen Malervlieses, bei dem das Grundvlies wahlweise mit einem Acrylatvorstrich als Bindemittel verfestigt und die als Paste formulierte Haftkleberzusammensetzung anschließend im Siebdruckverfahren rasterförmig auf das Grundvlies aufgetragen wird. Es entsteht eine rasterförmige und damit offenporige Haftkleberschicht mit über das Grundvlies verteilten Kleberpunkten, so dass offene Poren des Grundvlieses nicht von der Haftkleberschicht bedeckt werden und die Porosität des Grundvlieses im Wesentlichen erhalten bleibt.

Das erfindungsgemäße Malervlies weist zunächst die Vorteile herkömmlicher Glasfasergewebe auf. Es ist nicht verrottbar und daher auch in feuchter Umgebung stabil. Außerdem ist das Malervlies schwer entflammbar und kann daher in brandgefährdeter Umgebung verwendet werden. Durch den Anteil an organischen Fasern ist das erfindungsgemäße Malervlies aber weniger bruchempfindlich und lässt sich leicht auch um Ecken und Kanten herum verlegen. Die im Schaumverfahren aufgetragene Haftkleberschicht ermöglicht eine trockene Verlegung und stellt außerdem eine ausgezeichnete Luftdurchlässigkeit sicher, da die im Grundvlies vorhandenen offenen Poren im Wesentlichen frei bleiben und nicht durch die Kleberschicht abgedeckt werden, wie dies bei Verwendung der üblichen Auftragsverfahren mit Nasskleber der Fall wäre. Das hohe Porenvolumen des Malervlieses gewährleistet auch die optimale Durchdringung mit einem auf das Vlies aufgetragenen Haftanstrich, der dann eine dauerhafte feste Verbindung mit dem Untergrund herstellen kann. Das Malervlies erlaubt damit eine ausreichende Dampfdiffusion und stellt somit ein angenehmes Wohnklima bereit.

Weitere Ausgestaltungen der Erfindung sind in den Unteransprüchen angegeben, die wahlweise miteinander kombiniert werden können.

Als Mineralfasern können insbesondere synthetische anorganische Fasern wie Gesteinsfasern, Schlackenfasern, keramische Fasern, Glasfasern und deren Mischungen zur Herstellung des Grundvlieses eingesetzt werden. Besonders bevorzugt ist ein Grundvlies auf der Basis von Textilglasfasern.

Ganz besonders bevorzugt sind die zur Herstellung des Grundvlieses verwendeten Glasfasern E-Glasfasern mit einem Faserdurchmesser von mindestens 8 µm, bevorzugt 8 bis 15 µm. Die Faserlänge beträgt bevorzugt 5 bis 20 mm, besonders bevorzugt 5 bis 15 mm.

Die zur Herstellung des Grundvlieses verwendeten organischen Fasern können Naturfasern oder Synthesefasern sein. Beispiele für Naturfasern sind natürliche Cellulosefasern, wie Fasern aus Baumwolle, Flachs, Hanf, Sisal und Jute. Beispiele für geeignete Sythesefasern sind synthetische Cellulosefasern, wie Viskosefasern, Modalfasern und Lyocellfasen, sowie Fasern aus Polyester wie PET, Polyamid, Polyolefin wie Polyethylen und Polypropylen, Polyacrylnitril (PAN) und Poly(meth)acrylat. Als Polyamide können aliphatische Polyamide wie Nylon, teilaromatische Polyamide wie PA 6T und aromatische Polyamide (Aramide) wie Kevlar™ oder Nomex™ eingesetzt werden. Das Grundvlies kann auch Mischungen der genannten Fasern enthalten.

Besonders bevorzugt ist das Grundvlies aus Textilglasfasern und Polyesterfasern oder Cellulosefasern gebildet.

Erfindungsgemäß enthält das Grundvlies die organischen Fasern in einem Anteil von 10 bis 40 Gewichtsprozent, bezogen auf das Gesamtgewicht der Fasern im Grundvlies, jedoch ohne Bindemittel. Bevorzugt sind die organischen Fasern in einem Anteil von 15 bis 30 Gewichtsprozent, vorzugsweise 20 bis 30 Gewichtsprozent der Fasern enthalten. Die Erfinder haben erkannt, dass ein Anteil von mindestens 10 Gewichtsprozent an organischen Fasern ausreicht, um eine hinreichende Kantenfestigkeit und Bruchsicherheit zu gewährleisten. Somit lassen sich die erfindungsgemäßen Malervliese ohne besondere Sicherheitsvorkehrungen verarbeiten. Ein zu hoher Anteil an organischen Fasern führt jedoch dazu, dass die Dimensionsstabilität des Malervlieses eingeschränkt ist und außerdem eine Verwendung in feuchter oder brandgefährdeter Umgebung nicht mehr möglich ist.

Das Flächengewicht des Grundvlieses, ohne Kleberbeschichtung, beträgt bevorzugt von 30 bis 100 g/m², besonders bevorzugt von 35 bis 70 g/m². Vliese mit niedrigeren Flächengewichten können zwar eingesetzt werden, lassen sich aber schlecht verarbeiten. Ein Grundvlies mit höherem Flächengewicht kann eine schlechte Dampfdurchlässigkeit sowie eine erhöhte Biegesteifigkeit aufweisen und ist daher zur Verwendung in Wohnbereichen weniger geeignet.

Das Grundvlies kann in üblicher Weise als nasschemisch verfestigtes Vlies, Spinnvlies, trocken thermisch verfestigtes Vlies oder mechanisch verfestigtes Vlies ausgeführt sein. Eine trockene thermische Verfestigung kann mittels sogenannter "Bikomponenten-Schmelzfasern" erfolgen. Die mechanische Verfestigung erfolgt bevorzugt durch Vernadeln oder durch Wasserstrahlverfestigung. Bevorzugt wird das Grundvlies nasschemisch im Vlieslegeprozess oder durch Besprühen oder Tränken mit einem für den jeweiligen Anwendungsfall geeigneten Bindemittel verfestigt. Als Bindemittel können die im Stand der Technik bekannten Kunstharze verwendet werden, beispielsweise Kunstharze auf Basis von Polyurethan, Polyharnstoff oder Polyacrylat.

Gute Ergebnisse können mit einem Grundvlies erzielt werden, das einen Faseranteil von etwa 70 bis 80 Gewichtsprozent und einen Bindemittelanteil von etwa 20 bis 30 Gewichtsprozent aufweist. Der Faseranteil enthält vorzugsweise etwa 70 bis 80 Gewichtsprozent Glasfasern und etwa 20 bis 30 Gewichtsprozent organische Fasern. Ein solches Grundvlies ist im Allgemeinen mechanisch und chemisch stabil, flammhemmend und nicht verrottbar. Da wegen der verbesserten Bruchfestigkeit keine Mineralfaserpartikel freigesetzt werden, lassen sich die Grundvliese auch im Wohnbereich unbedenklich verarbeiten.

Besonders bevorzugt wird das Grundvlies mit einem Acrylatvorstrich verfestigt und für die weiteren Bearbeitungsschritte vorbereitet. Das Auftragsgewicht des Acrylat-Bindemittels beträgt vorzugsweise 5 bis 15 g/m³. Ein derartig vorbehandeltes Grundvlies lässt sich besonders gut in den nachfolgenden automatisierten Beschichtungsverfahren verarbeiten.

Erfindungsgemäß weist das Grundvlies offene Poren auf. Die Porosität des Grundvlieses führt zu einer hohen Luftdurchlässigkeit, die gemäß DIN EN ISO 9237 bestimmt werden kann. Bevorzugt weist das Grundvlies eine Luftdurchlässigkeit von über 3000 l/m²·s auf, besonders bevorzugt von 3000 bis 6000 l/m²·s, gemessen bei einem Differenzdruck von 2 mbar.

Die rückseitig auf das Grundvlies aufgetragene Haftkleberschicht ist bevorzugt selbsthaftend. Haftkleber sind permanent klebrige Produkte, die im Kontakt mit Substraten bereits unter Anwendung eines leichten Anpressdrucks Adhäsion aufbauen. Unter "selbsthaftend" wird in diesem Zusammenhang, im Unterschied zu selbstklebend, eine Klebeeigenschaft verstanden, die durch eine relativ geringe Adhäsion bei gleichzeitig hoher Kohäsion gekennzeichnet ist. Selbsthaftende Klebstoffe sind somit wiederablösbar und repositionierbar. Während der Befestigung des Malervlieses am Untergrund sind daher Standkorrekturen möglich, d.h. die Vliesbahn kann abgenommen und erneut eingepasst werden.

Die rückseitige Beschichtung des Grundvlieses mit der Haftkleberzusammensetzung in Form einer durchgehenden offenporigen Dünnschicht ermöglicht eine trockene Verlegung der erfindungsgemäßen Malervliese. Es wird also kein Nasskleber benötigt und das Auftragen des Klebers an die Wand entfällt. Aufgrund des geringeren Arbeitsaufwands werden Lohn- und Materialkosten eingespart.

Die im Siebdruckverfahren oder Schaumauftragsverfahren als offenporige Dünnschicht aufgetragene selbsthaftende Beschichtung bewirkt außerdem eine gute Haftung des Malervlieses am Untergrund. Es kann also mit vergleichsweise geringen Klebermengen gearbeitet werden. Durch die geringe Klebermenge ist auch die Wasserdampfdurchlässigkeit des Vlieses gegenüber dem Nasskleberverfahren erhöht, bei dem die vollflächig aufgetragene Kleberschicht auf der Wand als Diffusionssperre wirkt und der Feuchtigkeitsaustausch gemindert wird. Das erfindungsgemäße Malervlies gewährleistet somit ein gesundes Wohnklima und ergibt einen gewünschten baubiologischen Vorteil. Die erfindungsgemäßen Malervliese weisen darüber hinaus eine hohe Reißfestigkeit auf.

Die auf das Grundvlies aufgebrachte Haftkleberschicht kann außerdem die durch das Beschneiden und Einpassen der Vliesbahnen während des Tapezierens entstehenden Faserstäube und Schwebeteilchen binden. Dies ist für hautempfindliche Verarbeiter eine spürbare Erleichterung und führt auch zu einem verbesserten Gesundheitsschutz.

Gemäß einer bevorzugten Ausführungsform umfasst die Haftkleberzusammensetzung ein Acrylat-Copolymer. Zusätzlich kann die Haftkleberzusammensetzung weitere Additive wie Schaumbildner und Schaumstabilisatoren, UV-Stabilisatoren, Weichmacher, Benetzungshilfsmittel und Hydrophilierungsmittel enthalten. Die Haftkleberzusammensetzung liegt bevorzugt in wässriger Suspension oder Lösung vor, oder ist pastenförmig eingestellt.

Besonders bevorzugt enthält die Haftkleberzusammensetzung wenigstens ein Pigment, bevorzugt ein Weißpigment wie Kreide, Bariumsulfat, Zinksulfid, Zinkoxid oder Titandioxid. Das Pigment kann in einem Anteil von 0,5 bis 10 Gewichtsprozent enthalten sein, bevorzugt von 3 bis 5 Gewichtsprozent, bezogen auf das Gesamtgewicht der Haftkleberzusammensetzung. Durch den Pigmentzusatz kann das ursprünglich transparente Malervlies bei Bedarf eingefärbt und bereits eine erste Abdeckung des Untergrunds erreicht werden. Ein späterer Anstrich mit Dispersionsfarben kann daher mit geringerem Materialauftrag ausgeführt werden.

Das Auftragsgewicht der Haftkleberzusammensetzung liegt bevorzugt in einem Bereich von 5 bis 40 g/m², weiter bevorzugt von 10 bis 30 g/m² oder 15 bis 40 g/m², besonders bevorzugt von 25 bis 30 g/m², bezogen auf die Trockenmasse der Haftkleberzusammensetzung, das heißt ohne Wasser und andere Lösungsmittel.

Das Auftragen der Haftkleberzusammensetzung auf die Rückseite des Grundvlieses erfolgt erfindungsgemäß aus einem Schaum. Mit Hilfe des Schaumauftragsverfahrens können hohe Auftragsgewichte unter Beibehaltung einer hohen Porosität erzielt werden. Die im Schaumauftragsverfahren gebildete Haftkleberschicht bildet somit eine durchgängige offenporige oder auch netzförmige Dünnschicht aus, ohne die Poren des Grundvlieses vollständig zu bedecken.

Das Auftragen der Haftkleberzusammensetzung kann sowohl mit einem Rakelsystem als auch mittels Schaumfoulard erfolgen. Beim Auftragen mittels Schaumfoulard wird die Haftkleberzusammensetzung aufgeschäumt und in einen Schaumkasten eingebracht. Der Schaum wird dann mit dem auf einer Walze unter dem Schaumkasten laufenden Grundvlies in Kontakt gebracht und abgerakelt. Beim Auftrag mittels Rakelsystem wird die Haftkleberzusammensetzung ebenfalls aufgeschäumt, vollflächig auf das zu beschichtende Vlies aufgetragen und anschließend mit einer Rakel abgezogen.

Durch die Verwendung des Schaumauftrags kann im Vergleich zum vollflächigen Kleberauftrag im Nassprozess auch Wasser als Lösungsmittel in erheblichem Umfang eingespart werden. Bei den im bekannten Nassprozess mittels Foulard aufgetragenen Klebern beträgt der Wasseranteil etwa 80 Gewichtsprozent der Klebersuspension. Dagegen liegt der Wasseranteil der erfindungsgemäß im Schaumverfahren aufgetragenen Haftkleberzusammensetzung bei nur 20 bis 40 Gewichtsprozent. Dies bedeutet gleichzeitig, dass im nachfolgenden Trockenprozess auch nur die Hälfte bis zu einem Viertel der Wassermenge im Vergleich zum Nassprozess entfernt werden muss. Daraus folgt zusätzlich zu dem geringeren Wasserverbrauch eine erhebliche Energieeinsparung und eine höhere Produktionsgeschwindigkeit. Das erfindungsgemäß verwendete Schaumverfahren ist somit nicht nur wirtschaftlicher sondern auch umweltschonender als ein im Nassprozess durchgeführter Kleberauftrag.

Gemäß einer weiteren Ausführungsform wird die Haftkleberzusammensetzung als Paste formuliert und rasterförmig im Siebdruckverfahren auf das wahlweise mit einem Acrylatvorstrich vorverfestigte Grundvlies aufgetragen. Bevorzugt erfolgt das Auftragen der Haftkleberzusammensetzung in einem Rotationssiebdruckverfahren, bei dem Haftkleberzusammensetzung als Paste in eine als Hohlwalze gebildete Siebschablone geführt und mit Hilfe einer Innenrakel auf dem außenseitig an der Siebschablone vorbeigeführten Grundvlies verteilt wird. Die Siebschablone weist bevorzugt eine Lochdichte von 4 bis 50 Loch/cm² bei einem Lochdurchmesser von 0,5 bis 0,8 mm. Es entsteht ein rasterförmiges Muster von Klebepunkten, die vollflächig über das Grundvlies verteilt sind, wobei der Anteil der von den Klebepunkten bedeckten Fläche des Grundvlieses bezogen auf die Gesamtfläche des Grundvlieses im Bereich von 9 bis 20 % liegt, vorzugsweise im Bereich von 10 bis 12 %. Auf diese Weise ist gewährleistet, dass die Porosität und Luftdurchlässigkeit des Grundvlieses trotz eines vollflächigen Haftkleberauftrags im Wesentlichen erhalten bleibt.

Als Dünnschicht wird hier und im Folgenden eine Haftkleberschicht mit einer Schichtdicke von höchstens 500 µm angesehen. Bevorzugt liegt die Dicke der Haftkleberschicht bei höchstens 350 µm, weiter bevorzugt bei höchstens 250µm bis 200 µm, besonders bevorzugt bei höchstens 150 µm und ganz besonders bevorzugt bei höchstens 100 µm. Insbesondere kann die Schichtdicke in einem Bereich von 10 bis 100 µm liegen, bevorzugt von 10 bis 50 µm.

Die Porosität des mit Haftkleber beschichteten Grundvlieses beträgt bevorzugt mindestens etwa 50 Prozent, besonders bevorzugt mindestens 75 %, der Porosität des unbeschichteten Grundvlieses, gemessen als Veränderung der Luftdurchlässigkeit gemäß DIN EN ISO 9237 vor und nach der Beschichtung mit der Haftkleberzusammensetzung.

Das beschichtete Malervlies zeichnet sich außerdem durch eine verringerte Neigung zu Kantenbrüchen aus.

Die mechanische Stabilität des Malervlieses kann ferner durch Verstärken mit einem offenporigen Gewebe, beispielsweise aus Glasfasern, Polyolefinfasern, Polyacrylfasern oder Polyamidfasern erhöht werden. Bevorzugt wird zur Verstärkung ein Glasfasergewebe verwendet. Das vorzugsweise weitmaschige Verstärkungsgewebe wird auf die Rückseite des Malervlieses auflaminiert, und anschließend wird die Rückseite des Verbunds aus Vliesstoff und Verstärkungsgewebe mit der Haftkleberzusammensetzung im Siebdruckverfahren oder Schaumauftrag beschichtet.

Das erfindungsgemäße Malervlies kann aufgrund seiner offenporigen Struktur auch zusammen mit einem haftverstärkenden und/oder dekorativen Anstrich verwendet werden. In diesem Fall ist das Malervlies als für den Anstrich durchlässiges Wirrfasergelege ausgebildet. Bei dieser Ausführungsform steht also eine große "offene" Fläche bereit, durch die ein nach der Verlegung der Vliesstoffbahnen auf deren Vorderseite aufgetragener BinderHaft- und/oder Füllanstrich durchschlagen und das Malervlies dauerhaft mit der Wand verbinden kann. Die offene Fläche des Vliesstoffes kann dabei mit einem stark oder weniger stark in den Wanduntergrund penetrierenden Anstrich versehen werden, wobei die Penetrationsfähigkeit des haftverstärkenden und/oder dekorativen Anstrichs über dessen Bindergehalt nahezu stufenlos einstellbar ist. Mit dem Anstrich kann somit entweder ein dauerhafter Verbund zwischen dem Malervlies und dem Untergrund hergestellt oder alternativ auch die Haftung zwischen Malervlies und einem entsprechend vorbereiteten Untergrund so eingestellt werden, dass das überstrichene Malervlies nach dem Abwohnen abgezogen werden kann.

Das erfindungsgemäße Malervlies eignet sich daher auch zur Verwendung in einem Wandaufbau, der eine Tragschicht und das auf die Tragschicht aufgebrachte selbsthaftende Malervlies umfasst, wobei das Malervlies auf einer der Tragschicht zugewandten Rückseite mit einer durchgehenden, offenporigen Haftkleberschicht und auf einer der Tragschicht entgegengesetzten Vorderseite mit einem haftverstärkenden und/oder dekorativen Anstrich versehen ist. Die Haftkleberschicht stellt eine Adhäsion zu allen streich- und tapezierfähigen Untergründen her. Der Anstrich durchdringt die offenen Poren des Malervlieses und verbindet das Malervlies zusätzlich mit der Tragschicht.

Als Tragschicht bzw. Untergrund können mineralische Putze und glatte Baustoffe, Dispersionsaltanstriche und Neuspachtelflächen, Gipskartonbauplatten, Holzwerkstoffe wie Spanplatten und MDF sowie Wand und Bauelemente aller Art, einschließlich korrosionsgeschützter Metallflächen verwendet werden.

Der haftverstärkende und/oder dekorative Anstrich ist bevorzugt eine emissions- und lösungsmittelfreie ELF-Dispersionsfarbe, die transparent oder pigmentiert sein kann. Durch Verwendung von ELF-Dispersionen kann die Ausdünstung gesundheitsbedenklicher Stoffe vermieden und die Verwendbarkeit im Wohnbereich gewährleistet werden.

Das erfindungsgemäße Malervlies kann als vorgefertigte, bahnförmige Rollenware bereitgestellt werden. Zur Anwendung wird der Wanduntergrund, falls erforderlich, fachgerecht vorbehandelt und das Vlies von der Rolle direkt auf die Tragschicht tapeziert, mittels eines Kunststoffspachtels fest angerieben und je nach Bedarf an der Wand zugeschnitten.

Ohne jegliche Zwischentrocknung kann danach der vorderseitige vollflächige Anstrich erfolgen. Der Anstrich penetriert durch die im Vlies vorhandene offene Fläche und verbindet den Untergrund bzw. die Tragschicht mit dem Vlies. Durch Auswahl besonders formulierter Dispersionsanstriche kann die Festigkeit der Verbindung zum Untergrund zusätzlich gesteuert werden. Bindemittelreiche Dispersionen bewirken eine dauerhafte feste Verbindung, während die Verwendung von besonders formulierten bindemittelarmen ELF-Kunststoffdispersionen und einer besonderen Untergrundvorbereitung eine geringe Haftung ergibt, die ein trockenes Abziehen des überstrichenen Malervlieses ermöglicht.

Nach dem haftverstärkenden Dispersionsanstrich oder dem dekorativen Anstrich entstehen tuchartige Oberflächenstrukturen, die aus ästhetischen Gründen gewünscht sind.

Die offenporige Struktur des beschichteten Malervlieses fördert die Dampfdiffusion und sorgt so für ein angenehmes Wohnklima. Auch in feuchten oder hygienisch anspruchsvollen Räumen tritt nach dem Anstrich keine Blasenbildung oder Ablösung des Wandbelags auf. Durch die Verwendung von Malervliesen auf Basis von Mineralfasern ist außerdem ein ausreichender Brandschutz sichergestellt.

Weitere Merkmale und Vorteile der Erfindung ergeben sich aus der nachfolgenden Beschreibung einer bevorzugten Ausführungsform, die jedoch nicht in einem einschränkenden Sinn verstanden werden soll.

### Beispiel 1

Ein im nasschemischen Verfahren hergestelltes und verfestigtes Hybridfaservlies mit einem Faseranteil von etwa 80 Gewichtsprozent und einem Bindemittelanteil von etwa 20 Gewichtsprozent wurde mit einem Rakelauftragssystem einseitig mit einer aufgeschäumten Haftkleberzusammensetzung auf der Grundlage eines Acrylat-Copolymers beschichtet und getrocknet. Das Hybridfaservlies hatte ein Flächengewicht von etwa 40 g/m². Der Faseranteil des Vlieses war aus etwa 20 Gewichtsprozent Polyesterfasern und etwa 80 Gewichtsprozent Glasfasern mit einem Durchmesser von etwa 10 µm bei einer Faserlänge von etwa 10 mm zusammengesetzt. Das Auftragsgewicht der aufgeschäumten Haftkleberzusammensetzung betrug 30 g/m². In der Haftkleberzusammensetzung waren etwa 5 Gewichtsprozent Weißpigment enthalten.

Die Luftdurchlässigkeit des Hybridfaservlieses wurde vor und nach dem Auftragen und Trocknen der Haftkleberschicht gemäß DIN EN ISO 9237 bei einer Druckdifferenz von 2 mbar (200 Pa) gemessen. Als Vergleichsprobe diente ein herkömmliches Glasfaservlies ohne organische Fasern mit einem Flächengewicht von 40 g/m². Die erhaltenen Messwerte sind in der nachfolgenden Tabelle 1 angegeben.

**Tabelle 1**

| | Glasfaservlies | Hybridfaservlies |
|---|---|---|
| Luftdurchlässigkeit | [l/m²·s] | [l/m²·s] |
| Unbeschichtet | 3350 | 3280 |
| Beschichtet | 1910 | 2770 |

Die Messwerte zeigen, dass die offenporige Struktur des Vliesstoffs auch nach dem Auftragen des aufgeschäumten Haftklebers im Wesentlichen erhalten bleibt. Gegenüber reinen Glasfaservliesen zeigt das im Schaumverfahren beschichtete Hybridfaservlies sogar eine höhere Luftdurchlässigkeit.

### Beispiel 2

Ein im nasschemischen Verfahren hergestelltes und verfestigtes Hybridfaservlies mit einem Faseranteil von etwa 80 Gewichtsprozent und einem Bindemittelanteil von etwa 20 Gewichtsprozent wurde mit einer wässrigen, weißpigmenthaltigen Acrylatdispersion mit ca. 11 g/qm vorbeschichtet.

Das Hybridfaservlies hatte ein Flächengewicht von etwa 40 g/m². Der Faseranteil des Vlieses war aus etwa 20 Gewichtsprozent Polyesterfasern und etwa 80 Gewichtsprozent Glasfasern mit einem Durchmesser von etwa 10 µm bei einer Faserlänge von etwa 10 mm zusammengesetzt. Dieses vorbeschichtete Hybridfaservlies wurde im Rotationsdruckverfahren mit einem pastösen Haftkleber auf Basis eines Acrylat-Copolymers einseitig rasterförmig bedruckt und getrocknet. Das Auftragsgewicht der aufgedruckten Haftkleberpaste betrug 14 g/qm.

Die Luftdurchlässigkeit des mit einem pigmentierten Acrylatvorstrich verfestigte Hybridfaservlieses wurde vor und nach dem Auftragen im Rotationsdruckverfahren und Trocknen der Haftkleberschicht gemäß DIN EN ISO 9237 bei einer Druckdifferenz von 2 mbar (200 Pa) gemessen. Als Vergleichsprobe diente ein herkömmliches Glasfaservlies ohne organische Fasern mit einem Flächengewicht von 40 g/m². Die erhaltenen Messwerte sind in der nachfolgenden Tabelle 2 angegeben.

**Tabelle 2**

| | Glasfaservlies | Hybridfaservlies |
|---|---|---|
| Luftdurchlässigkeit | [l/m²·s] | [l/m²·s] |
| Unbeschichtet | 3350 | 3026 |
| Beschichtet | 1910 | 2606 |

Die Messwerte zeigen, dass die offenporige Struktur des Vliesstoffs auch nach dem Druckauftrag des pastenförmigen Haftklebers im Wesentlichen erhalten bleibt. Gegenüber reinen Glasfaservliesen zeigt das im Rotationsdruckverfahren beschichtete Hybridfaservlies sogar eine höhere Luftdurchlässigkeit.

Die so hergestellten Malervliese konnten ohne besondere Sicherheitsvorkehrungen auch um Ecken und Kanten herum auf einem streichfähigen Untergrund verlegt werden. Aufgrund der Pigmentierung des Malervlieses wurde eine erste Abdeckung von Farbunterschieden im Untergrund erzielt. Nach Auftrag einer Dispersionsfarbe als haftverstärkender Anstrich war das Malervlies fest mit dem Untergrund verbunden.

## Patentansprüche

1. Überstreichbares Malervlies mit einem Grundvlies aus Mineralfasern in einem Anteil von 60 bis 90 Gewichtsprozent und organischen Fasern in einem Anteil von 10 bis 40 Gewichtsprozent sowie einem Bindemittelanteil von 0 bis 30 Gewichtsprozent, jeweils bezogen auf das Gesamtgewicht des Grundvlieses, und mit einer Rückseite zur Befestigung an einem Untergrund, die mit einer Haftkleberzusammensetzung beschichtet ist, wobei die Haftkleberzusammensetzung eine rasterförmig angeordnete oder durchgehende unterbrochene Schicht bildet, und wobei das Grundvlies offene Poren aufweist, die nicht von der Haftkleberzusammensetzung bedeckt sind.

2. Malervlies nach Anspruch 1, **dadurch gekennzeichnet, dass** die Mineralfasern aus Glasfasern bestehen.

3. Malervlies nach Anspruch 1 oder 2, **dadurch gekennzeichnet, dass** die organischen Fasern aus der aus Naturfasern, synthetischen Cellulosefasern, Polyester, Polyolefin, Polyamid, Poly(meth)acrylat, Polyacrylnitril und deren Mischungen bestehenden Gruppe ausgewählt sind.

4. Malervlies nach Anspruch einem der Ansprüche 1 bis 3, **dadurch gekennzeichnet dass** das Grundvlies organische Fasern in einem Anteil von 15 bis 30 Gewichtsprozent, bevorzugt 20 bis 30 Gewichtsprozent, enthält.

5. Malervlies nach einem der Ansprüche 1 bis 4, **dadurch gekennzeichnet, dass** das Grundvlies ein Flächengewicht von 30 bis 100 g/m², bevorzugt 35 bis 70 g/m² aufweist.

6. Malervlies nach einem der Ansprüche 1 bis 5, **dadurch gekennzeichnet, dass** die Haftkleberzusammensetzung selbsthaftend ist.

7. Malervlies nach einem der Ansprüche 1 bis 6, **dadurch gekennzeichnet, dass** die Haftkleberzusammensetzung ein Acrylat-Copolymer umfasst.

8. Malervlies nach einem der Ansprüche 1 bis 7, **dadurch gekennzeichnet, dass** die Haftkleberzusammensetzung ein Pigment in einem Anteil von 1 bis 10 Gewichtsprozent enthält.

9. Malervlies nach einem der Ansprüche 1 bis 8, **dadurch gekennzeichnet, dass** ein Auftragsgewicht der Haftkleberzusammensetzung in einem Bereich von 5 bis 40 g/m² liegt, bevorzugt von 10 bis 30 g/m².

10. Malervlies nach einem der Ansprüche 1 bis 9, **dadurch gekennzeichnet, dass** das Grundvlies auf der Rückseite mit einem Gewebe verstärkt ist, und die Haftkleberzusammensetzung auf die mit dem Gewebe verstärkte Rückseite aufgetragen ist.

11. Verfahren zur Herstellung eines überstreichbaren Malervlieses gemäß einem der Ansprüche 1 bis 10, bei dem ein Grundvlies aus Mineralfasern in einem Anteil von 60 bis 90 Gewichtsprozent und organischen Fasern in einem Anteil von 10 bis 40 Gewichtsprozent sowie einem Bindemittelanteil von 0 bis 30 Gewichtsprozent auf einer zur Befestigung an einem Untergrund vorgesehenen Rückseite mit einer Haftkleberzusammensetzung beschichtet wird, **dadurch gekennzeichnet dass** die Haftkleberzusammensetzung aufgeschäumt und anschließend unter Bildung einer durchgehenden unterbrochenen Haftkleberschicht auf die Rückseite des Grundvlieses aufgetragen wird, so dass offene Poren des Grundvlieses nicht von der Haftkleberschicht bedeckt werden.

12. Verfahren zur Herstellung eines überstreichbaren Malervlieses gemäß einem der Ansprüche 1 bis 10, bei dem ein Grundvlies aus Mineralfasern in einem Anteil von 60 bis 90 Gewichtsprozent und organischen Fasern in einem Anteil von 10 bis 40 Gewichtsprozent sowie einem Bindemittelanteil von 0 bis 30 Gewichtsprozent auf einer zur Befestigung an einem Untergrund vorgesehenen Rückseite mit einer Haftkleberzusammensetzung beschichtet wird, **dadurch gekennzeichnet dass** die Haftkleberzusammensetzung in Form einer Paste formuliert und in einen Siebdruckverfahren aufgetragen wird, unter Bildung einer rasterförmigen Haftkleberschicht mit über die Rückseite des Grundvlieses verteilen Kleberpunkten, so dass offene Poren des Grundvlieses nicht von der Haftkleberschicht bedeckt werden.

13. Verfahren nach Anspruch 11 oder 12, **dadurch gekennzeichnet, dass** der Haftkleber in einer Menge von 5 bis 40 g/m² aufgetragen wird, bevorzugt in einer Menge von 10 bis 30 g/m².

14. Verfahren nach einem der Ansprüche 11 bis 13, **dadurch gekennzeichnet, dass** die Luftdurchlässigkeit des mit der Haftkleberschicht beschichteten Grundvlieses mindestens 50 Prozent der Luftdurchlässigkeit des unbeschichteten Grundvlieses beträgt.

15. Verfahren nach einem der Ansprüche 11 bis 14, **dadurch gekennzeichnet, dass** vor dem Auftragen der Haftkleberzusammensetzung ein verstärkendes Gewebe auf die Rückseite des Faservlieses auflaminiert wird.

## Claims

1. An overpaintable nonwoven painter's fleece comprising a base nonwoven fabric made from mineral fibers in a proportion of 60 to 90 percent by weight and organic fibers in a proportion of 10 to 40 percent by weight and a binder content of 0 to 30 percent by weight, each based on the total weight of the base nonwoven fabric, and comprising a rear side for attachment to a substrate, the rear side being coated with a pressure-sensitive adhesive composition, wherein the pressure-sensitive adhesive composition forms a layer that is arranged in a grid shape or is continuous and interrupted, and wherein the base nonwoven fabric has open pores that are not covered by the pressure-sensitive adhesive composition.

2. The painter's fleece according to claim 1, **characterized in that** the mineral fibers consist of glass fibers.

3. The painter's fleece according to claim 1 or 2, **characterized in that** the organic fibers are selected from the group consisting of natural fibers, synthetic cellulose fibers, polyester, polyolefin, polyamide, poly(meth)acrylate, polyacrylonitrile and mixtures thereof.

4. The painter's fleece according to any of claims 1 to 3, **characterized in that** the base nonwoven fabric contains organic fibers in a proportion of 15 to 30 percent by weight, preferably 20 to 30 percent by weight.

5. The painter's fleece according to any of claims 1 to 4, **characterized in that** the base nonwoven fabric has a mass per unit area of 30 to 100 g/m², preferably 35 to 70 g/m².

6. The painter's fleece according to any of claims 1 to 5, **characterized in that** the pressure-sensitive adhesive composition is self-adhesive.

7. The painter's fleece according to any of claims 1 to 6, **characterized in that** the pressure-sensitive adhesive composition comprises an acrylate copolymer.

8. The painter's fleece according to any of claims 1 to 7, **characterized in that** the pressure-sensitive adhesive composition contains a pigment in a proportion of 1 to 10 percent by weight.

9. The painter's fleece according to any of claims 1 to 8, **characterized in that** a coating weight of the pressure-sensitive adhesive composition is in a range of from 5 to 40 g/m², preferably from 10 to 30 g/m².

10. The painter's fleece according to any of claims 1 to 9, **characterized in that** the base nonwoven fabric is reinforced with a woven fabric on the rear side, and the pressure-sensitive adhesive composition is applied to the rear side reinforced with the woven fabric.

11. A method of manufacturing an overpaintable nonwoven painter's fleece according to any of claims 1 to 10, in which a base nonwoven fabric made from mineral fibers in a proportion of 60 to 90 percent by weight and organic fibers in a proportion of 10 to 40 percent by weight and a binder content of 0 to 30 percent by weight is coated with a pressure-sensitive adhesive composition on a rear side provided for attachment to a substrate, **characterized in that** the pressure-sensitive adhesive composition is expanded and subsequently applied to the rear side of the base nonwoven fabric to form a continuous interrupted pressure-sensitive adhesive layer, so that open pores of the base nonwoven fabric are not covered by the pressure-sensitive adhesive layer.

12. A method of manufacturing an overpaintable nonwoven painter's fleece according to any of claims 1 to 10, in which a base nonwoven fabric made from mineral fibers in a proportion of 60 to 90 percent by weight and organic fibers in a proportion of 10 to 40 percent by weight and a binder content of 0 to 30 percent by weight is coated with a pressure-sensitive adhesive composition on a rear side provided for attachment to a substrate, **characterized in that** the pressure-sensitive adhesive composition is formulated in the form of a paste and applied in a screen printing process to form a grid-shaped pressure-sensitive adhesive layer having adhesive points distributed over the rear side of the base nonwoven fabric, so that open pores of the base nonwoven fabric are not covered by the pressure-sensitive adhesive layer.

13. The method according to claim 11 or 12, **characterized in that** the pressure-sensitive adhesive is applied in an amount of 5 to 40 g/m², preferably in an amount of 10 to 30 g/m².

14. The method according to any of claims 11 to 13, **characterized in that** the air permeability of the base nonwoven fabric coated with the pressure-sensitive adhesive layer is at least 50 percent of the air permeability of the uncoated base nonwoven fabric.

15. The method according to any of claims 11 to 14, **characterized in that** prior to application of the pressure-sensitive adhesive composition, a reinforcing woven fabric is laminated onto the rear side of the nonwoven fabric.

## Revendications

1. Non tissé de peinture apte à être recouvert de peinture et comportant un non tissé de base composé de fibres minérales dans une proportion de 60 à 90 pour cent en poids et de fibres organiques dans une proportion de 10 à 40 pour cent en poids et d'un taux de liant de 0 à 30 pour cent en poids, respectivement par rapport au poids total du non tissé de base, et comportant une face arrière pour la fixation sur un fond, laquelle est revêtue d'une composition de colle adhésive, la composition de colle adhésive formant une couche qui est agencée en forme de grille ou qui est continue et interrompue, et le non tissé de base présentant des pores ouverts qui ne sont pas recouverts par la composition de colle adhésive.

2. Non tissé de peinture selon la revendication 1, **caractérisé en ce que** les fibres minérales sont composées de fibres de verre.

3. Non tissé de peinture selon la revendication 1 ou 2, **caractérisé en ce que** les fibres organiques sont choisies dans le groupe constitué de fibres naturelles, de fibres de cellulose synthétiques, de polyester, de polyoléfine, de polyamide, de poly(méth)acrylate, de polyacrylonitrile et de leurs mélanges.

4. Non tissé de peinture selon l'une des revendications 1 à 3, **caractérisé en ce que** le non tissé de base contient des fibres organiques dans une proportion de 15 à 30 pour cent en poids, de préférence de 20 à 30 pour cent en poids.

5. Non tissé de peinture selon l'une des revendications 1 à 4, **caractérisé en ce que** le non tissé de base présente un poids par unité de surface de 30 à 100 g/m², de préférence de 35 à 70 g/m².

6. Non tissé de peinture selon l'une des revendications 1 à 5, **caractérisé en ce que** la composition de colle adhésive est autoadhésive.

7. Non tissé de peinture selon l'une des revendications 1 à 6, **caractérisé en ce que** la composition de colle adhésive comprend un copolymère d'acrylate.

8. Non tissé de peinture selon l'une des revendications 1 à 7, **caractérisé en ce que** la composition de colle adhésive contient un pigment dans une proportion de 1 à 10 pour cent en poids.

9. Non tissé de peinture selon l'une des revendications 1 à 8, **caractérisé en ce qu'**un poids d'application de la composition de colle adhésive est dans une plage de 5 à 40 g/m², de préférence de 10 à 30 g/m².

10. Non tissé de peinture selon l'une des revendications 1 à 9, **caractérisé en ce que** le non tissé de base est renforcé par un tissu sur la face arrière, et **en ce que** la composition de colle adhésive et appliquée sur la face arrière renforcée par le tissu.

11. Procédé de fabrication d'un non tissé de peinture apte à être recouvert de peinture selon l'une des revendications 1 à 10, dans lequel un non tissé de base composé de fibres minérales dans une proportion de 60 à 90 pour cent en poids et de fibres organiques dans une proportion de 10 à 40 pour cent en poids et d'un taux de liant de 0 à 30 pour cent en poids est revêtu d'une composition de colle adhésive sur une face arrière prévue pour la fixation sur un fond, **caractérisé en ce que** la composition de colle adhésive est moussée et est ensuite appliquée sur la face arrière du non tissé de base en formant un couche de colle adhésive continue et interrompue de sorte que des pores ouverts du non tissé de base ne sont pas recouverts par la couche de colle adhésive.

12. Procédé de fabrication d'un non tissé de peinture apte à être recouvert de peinture selon l'une des revendications 1 à 10, dans lequel un non tissé de base composé de fibres minérales dans une proportion de 60 à 90 pour cent en poids et de fibres organiques dans une proportion de 10 à 40 pour cent en poids et d'un taux de liant de 0 à 30 pour cent en poids est revêtu d'une composition de colle adhésive sur une face arrière prévue pour la fixation sur un fond, **caractérisé en ce que** la composition de colle adhésive est formulée sous forme de pâte et est appliquée par un procédé de sérigraphie en formant une couche de colle adhésive en forme de grille avec des points de colle distribués sur la face arrière du non tissé de base de sorte que des pores ouverts du non tissé de base ne sont pas recouverts par la couche de colle adhésive.

13. Procédé selon la revendication 11 ou 12, **caractérisé en ce que** la colle adhésive est appliquée dans une quantité de 5 à 40 g/m², de préférence dans une quantité de 10 à 30 g/m².

14. Procédé selon l'une des revendications 11 à 13, **caractérisé en ce que** la perméabilité à l'air du non tissé de base revêtu de la couche de colle adhésive est d'au moins 50 pour cent de la perméabilité à l'air du non tissé de base non revêtu.

15. Procédé selon l'une des revendications 11 à 14, **caractérisé en ce qu'**un tissu de renforcement est laminé sur la face arrière du non tissé fibreux avant l'application de la composition de colle adhésive.
